(19) Europäisches Patentamt
European Patent Office
Office européen des brevets

(11) **EP 1 384 988 B1**

(12) **EUROPEAN PATENT SPECIFICATION**

(45) Date of publication and mention
of the grant of the patent:
**07.03.2007 Bulletin 2007/10**

(51) Int Cl.:
**G01N 21/35** (2006.01)

(21) Application number: **02255098.2**

(22) Date of filing: **22.07.2002**

(54) **IR analysis system**

IR-Analysesystem

Système d'analyse infrarouge

(84) Designated Contracting States:
**AT BE BG CH CY CZ DE DK EE ES FI FR GB GR IE IT LI LU MC NL PT SE SK TR**

(43) Date of publication of application:
**28.01.2004 Bulletin 2004/05**

(73) Proprietor: **The Automation Partnership (Cambridge) Limited**
**Royston,**
**Hertfordshire SG8 5WY (GB)**

(72) Inventors:
• **Platt, Alan Graham**
**Royston,**
**Hertfordshire SG8 7JG (GB)**

• **Paley, Matthew Thomas**
**Cambridge,**
**Cambridgeshire CB1 3HN (GB)**

(74) Representative: **Brunner, Michael John**
**Gill Jennings & Every LLP**
**Broadgate House**
**7 Eldon Street**
**London EC2M 7LH (GB)**

(56) References cited:
**EP-A- 0 329 183**        **WO-A-99/12017**
**US-A- 3 748 044**        **US-A- 4 657 390**

## Description

The present invention relates generally to the analysis of small biological or chemical samples and more particularly to comparisons of the transmission or emission spectra in the Near Infrared to measure the degradation of solutions of compounds stored in microtubes.

In a system where a large number of very small samples are stored over a protracted period there is a risk that some of the samples may degrade over time by the ingress of unwanted impurities such as water. It is beneficial to be able to check whether a sample has been contaminated in a non-intrusive manner.

US-A-4675390 discloses a universal spectrometer system having a modular sampling chamber which is separately constructed, enclosed in a modular unit which is readily attachable too, and detachable from, one wall of a housing which constitutes the basic unit of the spectrometer, and which contains an interferometer, one or more detectors, and other portions of the system.

US-A-3748044 discloses a digital chemical analysis apparatus for evaluating rates of reaction and end point determinations that take place within a plurality of individual specimens.

WO 99/12017 discloses a method and device for identifying active substances in order to determine the formation of complexes between reactants.

According to the present invention there is provided an infra-red analysis system for analysing samples to detect degradation during storage, the samples being disposed in transparent or translucent containers, the system comprising: an infra-red light source; a container locating device for locating a container in a known position relative to the infra-red light source, a spectrometer disposed to receive infra-red light from the containers, means for reading the identity of a container, means arranged to transmit spectra recorded by the spectrometer to a database, means arranged to record the spectra and the identity of the container in the database in a record; and means arranged to compare spectra recorded by the spectrometer with a previously recorded spectrum stored in the database for the same container.

Preferably, the container locating device causes the tube to be rotated while maintaining its position relative to the infra-red light source.

The container locating device may be arranged to hold a microtube or a culture plate.

The spectrometer may be disposed to receive light transmitted or reflected by the container.

Figure 1 is a schematic of the apparatus for obtaining the spectra.

Figure 2 is a screen print showing the spectra of various components that are be found in the microtube 14.

Figure 3 is a screen print showing a spectrum obtained from an unknown substance that is found to be Dimethyl Sulfoxide (DMSO).

Figure 4 is a screen print showing a spectrum obtained from DMSO with an impurity imitated by passing the light through a sheet of plastic.

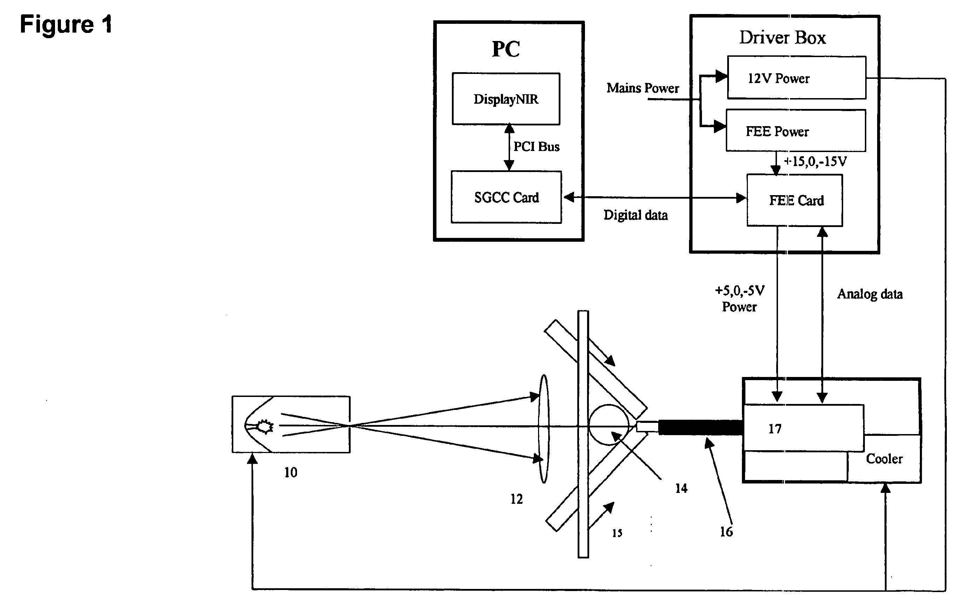

The schematic of Figure 1 shows a Near Infra-Red (NIR) light source 10, within a lamp enclosure. Light leaving the enclosure through an aperture is focussed by a lens 12 on to a sample to be analysed and which is held within a transparent or translucent microtube 14, secured in position by a tube holder 15 which has an optical fibre interface 16 to a spectrometer 17. The fibre optic 16 reduces the effects of refraction and scattering on the data sent to the spectrometer 17.

The microtube 14 may be held in place by a robot which may also spin the microtube 14 whilst maintaining its position relative to the light source 10. This reduces any errors that might occur as a result of imperfections in the fabric of the microtube 14. Alternatively the sample 13 may be held on a culture plate rather than in a microtube 14. This is especially appropriate when the sample 13 comprises living cells that can therefore be tested *in situ* on the plates in which they are growing. If the spectrum of a biological sample on a culture plate is obtained then it is possible to compare the spectrum at a later date to see whether the plate has been contaminated by products that suggest unprogrammed cell death, or necrosis, has taken place. If this is the case the cells may lyse and release products the spectrum of which can be detected.

The light source 10 is a 12V halogen lamp with an aluminium reflector. Such a lamp has an even light output throughout the NIR wavelengths that are used by the spectrometer 17 and also has the advantage that most of the light will be projected forwards. Projecting the NIR light through the aperture provides a uniform point source of light and allows for collimation of the beam. The use of a lens 12 to focus the light ensures that the light passes into the microtube 14 substantially perpendicular to the walls to minimise the optical path through the walls of the microtube and maximise the path through the contents, this also reduces unwanted lensing effects caused by the curved walls of the microtube. The tube holder 15, in the form of a V-shaped opening with the fibre optic 16 at its tip, allows easy and repeatable positioning of the microtube 14 relative to the light source 10 and fibre optic interface 16. Microtube sample 13 contains a compound which is generally dissolved in DMSO and this solution will absorb a proportion of the NIR radiation. The amount of radiation that is absorbed at each wavelength is dependent on the precise substance that is in the microtube 14, and on the chemical composition of the microtube 14 and the solvent and the radiation transmitted by the tube 14 and contents is detected by the spectrometer 17. The spectrometer 17 allows the amount of radiation that has been absorbed at a number of different wavelengths to be measured giving a chemical signature for the microtube 14 and the sample 13. This signature is stored in a database and can be retrieved at a later date to be compared with a new reading obtained by submitting the same microtube 14 and sample 13 to the tube holder 15 again. Any changes in the readings are attributed to changes in either the microtube 14 or the sample 13. These changes can then be analysed to determine the source of the degradation.

One particular source of degradation of a sample 13 may be the ingress of water into the microtube 14.

An example of a spectrometer that is appropriate is a Zeiss MMS Near Infra-Red spectrometer. The spectrometer uses a 128-element array covering wavelengths from $0.9\mu m$ to $1.7\mu m$.

The system is calibrated by obtaining white spectra over 20 integration values between 0.8ms and 51ms, for all values that are not saturated. Arrays are then built up of the raw count value against the integration time for all 128 wavelengths. Best fits are then calculated on each of these arrays to obtain equations relating the signal value to the integration period for each wavelength. These equations can be used to predict what the white spectrum would be for a given integration time if the detector were immune to saturation. Once the white reference spectrum has been calculated the substance to be measured is put into the system and a set of spectra are taken over the entire range of integration times allowed. The spectrometer 17 produces a vector of 128 integers representing the intensity at different wavelengths at approximately 6nm increments. To convert these integers into transmissions it is first necessary to know the spectra produced for zero and full transmission. It is then assumed that the spectrometer has a linear response over the range in question and therefore the values can be scaled such that black values go to 0 and unobstructed values go to 1.

The data acquisition is achieved by using two specially designed cards. The output from the spectrometer 17 is in the form of a series of analogue differential voltages which are proportional to the intensity of the light which falls on the internal CCD array during the predefined integration time. The output voltages are converted to a 14-bit digital number on a Front End Electronics card, which is mounted locally to the spectrometer to reduce noise interference on sensitive analogue lines. This digital data is transmitted serially to the Spectrometer Control Card mounted in a remote PC, which in turn transfers the data directly into PC RAM using DMA. These cards also control the digital control and clock signals required by the spectrometer 17. The integration time of the spectrometer 17 can also be controlled from the PC by writing to a register within the card.

Once the data has been collected a number of operations may be performed to determine the contents of the microtube 14. The transmission of light through a substance is subject to exponential decay of the form:

$$T = e^{k \log(t)}$$

where T is the transmission from $k$ units of substance with a single unit transmission of $t$. The algorithm works from an observed spectrum and attempts to express it as a combination of reference spectra. The spectrometer records light in 128 different wavelength intervals and therefore all 128 equations must be solved simultaneously. This is done using the Levenberg-Marquardt method. This can be used to find the quantity of each reference spectrum that gives the closest approximation to the observed spectrum. It is possible to measure the change in the quantity of a known substance even if the identity of the substances previously present in the container are not known. This requires that the substances in the container do not change but knowledge of what exactly they are is not necessary. For example given two spectra of the same sample both of which include a fixed degree of absorption from an unknown substance $t_c$ it is possible to determine the change in the quantity of a substance with a known spectra $t_b$ by analysing the ratio of the spectra. The original spectrum obtained from a container is $T_1 = t_c$. A subsequent spectrum from the container is $T_2 = t_b * t_c$. The ratio $T_1/T_2$ is $t_b$.

At any stage within this process the data may be displayed in graphical form with either the raw signal count or the transmission on the ordinate and the channel number in the spectrometer 17 on the abscissa. The channel number is related to the wavelength of the light and lower channel numbers correspond to longer wavelengths.

The limitations of the spectrometer's internal CCD array and optics may cause deterioration at each end of the spectrum to the extent that the signal-to-noise ratio could make the data unreliable. To overcome this, if necessary, the first and last few data points for each spectrum may be disregarded.

In order to remove systematic errors within the system it is important to remove the variations due to the dark reference point drifting over time. This is performed by a flat fielding operation, whereby an algorithm is used to combine a dark and a light spectrum to reduce the effects of non-linearities of the spectrometer.

The effects of self lensing around the microtube 14 can also be dealt with without the introduction of specific software by the introduction of a specific spectrum called "grey.nir". This is a simulated spectrum containing 0% absorption. Lensing causes the entire signal to be multiplied by an unknown value which effectively moves the while level up and down. Providing a uniformly absorbing spectrum allows the algorithm to bring the white level back to 1.0 by multiplying the entire spectrum by a suitable number.

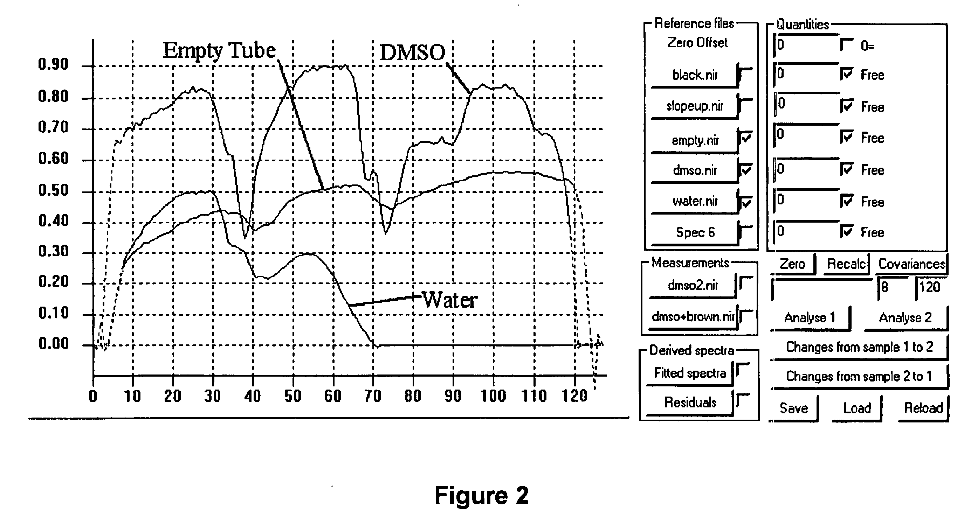

Once these effects have been taken into account the data may be analysed further. The spectrum obtained from a microtube will be made up from a number of components as shown in Figure 2. NIR will be absorbed in varying quantities by each of the components through which it passes. The spectrum that is obtained from the microtube will thus be reduced by varying amounts by each of the substances present in the mixture including the plastic from which the microtube is formed. The spectrum is analysed to determine which substances are present in the mixture. Firstly the absorption spectrum is calculated from the transmission spectrum. Any known components of the mixture can be measured separately and the data of their spectra can be stored in the database so that suitable comparisons can be made. An algorithm can be used to obtain a best fit line for the unknown contents of the microtube taking into consideration the reference absorption spectra.

The fitting spectra are obtained by multiplying the absorption spectra of the reference samples by a variable representing the proportion of the reference spectra seen. For example if the reference spectra of DMSO was taken through a 3mm sample the algorithm should produce a "quantity of DMSO present" value of 1.0 for 3mm and 0.1 for 0.3mm. Where multiple absorption spectra are present the calculated values should be the proportion of that substance present in the sample multiplied by the thickness of the sample and divided by the thickness of the reference sample. If all reference samples are normalised to the thickness of the containers being used the results will give the proportion of each substance in the container.

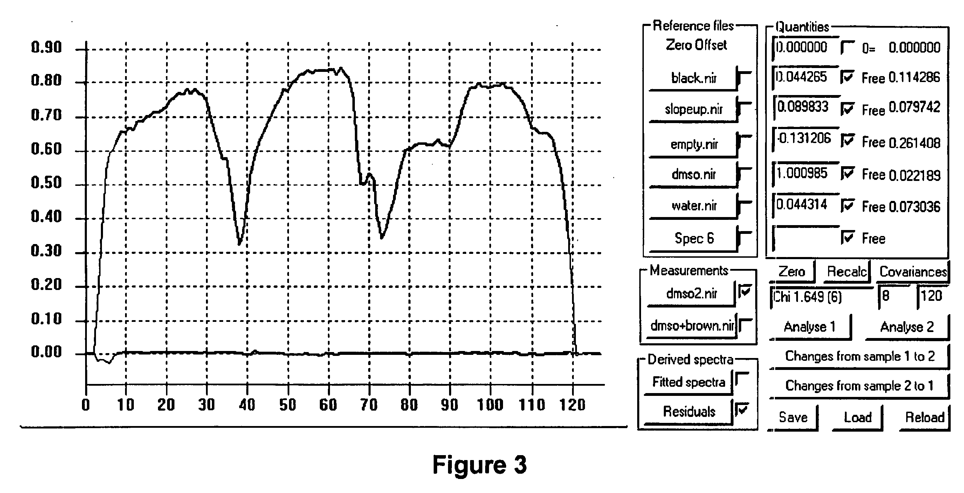

Figure 3 shows a spectrum obtained from a microtube 14. It is thought to contain DMSO and therefore the spectrum obtained is compared with the reference spectrum for DMSO. The ChiSquared value is low (1.649) which indicates a good correlation between the substance in the microtube and the reference spectrum for DMSO. It is therefore possible to deduce that the microtube contains DMSO.

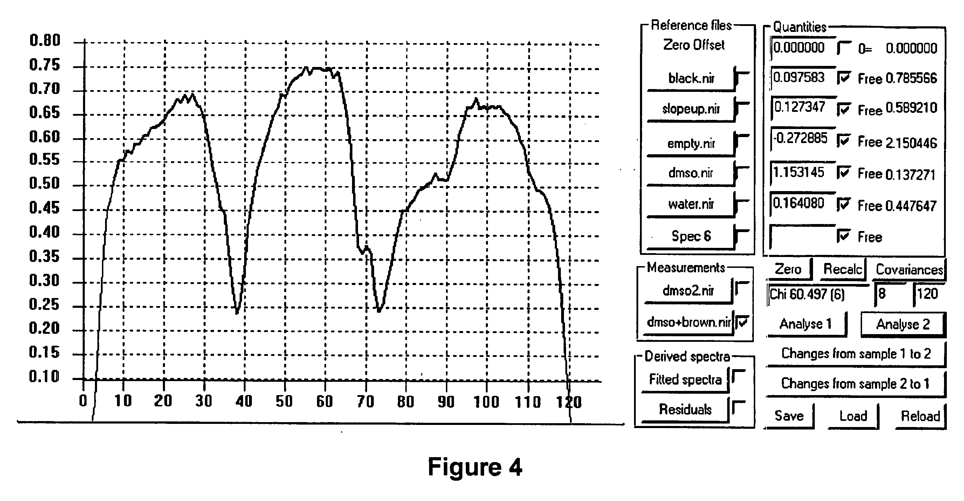

Figure 4 shows an apparently similar spectrum obtained from a microtube. In this case an impurity has been imitated by passing the light through a sheet of plastic. Although the microtube still contains DMSO the ChiSquared value, obtained when the spectrum from the microtube is compared with the reference spectrum for DMSO, is very high, suggesting that there is something else present as well as the DMSO.

If, for example, it is suspected that the sample is contaminated by water, it is possible to compare the reference data for water and for the previously measured contents of the microtube and examine the best fit line with error statistics. If the ChiSquared value is low then the identification of the contaminant as water is likely to be accurate. If the ChiSquared value is high then the identification has been incorrectly, or incompletely, made. The ChiSquared value is combined with the individual values to give an output ranging from 1 to 10 where less than 1 indicates an excellent fit, values around 5 are a poor fit and values around 10 are no fit.

Although the system has been designed with transmission spectra in mind if the substances are opaque, as is frequently the case with emulsions, then reflection spectra could be used instead.

## Claims

1. An infra-red analysis system for analysing samples to detect degradation during storage, the samples being disposed in transparent or translucent containers, the system comprising:

   an infra-red light source (10);
   a container locating device (15) for locating a container (14) in a known position relative to the infra-red light source (10),
   a spectrometer (17) disposed to receive infra-red light from the containers (14) and **characterised by**,
   means for reading the identity of a container,
   means arranged to transmit spectra recorded by the spectrometer to a database,
   means arranged to record the spectra and the identity of the container in the database in a record; and
   means arranged to compare spectra recorded by the spectrometer with a previously recorded spectrum stored in the database for the same container.

2. An infra-red analysis system according to claim 1, wherein the container locating device (15) causes the container (14) to be rotated while maintaining its position relative to the infra-red light source (10).

3. An infra-red analysis system according to claim 1 or claim 2, wherein the container locating device (15) is arranged to hold a microtube (14).

4. An infra-red system according to claim 1 or claim 2, wherein the container locating device (15) is arranged to hold a culture plate.

5. An infra-red system according to any of claims 1 to 4, wherein the spectrometer (17) is disposed to receive light transmitted by the container (14).

6. An infra-red system according to any of claims 1 to 4, wherein the spectrometer (17) is disposed to receive light reflected by the container (14).

## Patentansprüche

1. Infrarot-Analysesystem zum Analysieren von Proben, um eine Degradation während der Lagerung festzustellen, wobei die Proben in transparenten oder durchscheinenden Behältern angeordnet sind, umfassend:

   - eine infrarote Lichtquelle (10)
   - eine Behälter lokalisierende Vorrichtung (15) zum Lokalisieren eines Behälters (14) in einer bekannten Position relativ zur infraroten Lichtquelle (10),
- ein Spektrometer (17), das ausgestaltet ist, um infrarotes Licht von den Behältern (14) zu empfangen,

**gekennzeichnet durch**

- Mittel zum Lesen der Identität eines Behälters,
- Mittel, die ausgestaltet sind, um von dem Spektrometer aufgezeichnete Spektren an eine Datenbank zu übermitteln,
- Mittel, die ausgestaltet sind, um die Spektren und die Identität des Behälters in der Datenbank in einem Datensatz aufzuzeichnen, und
- Mittel, die ausgestaltet sind, um von dem Spektrometer aufgezeichnete Spektren mit einem zuvor aufgezeichneten Spektrum zu vergleichen, welches in der Datenbank für denselben Behälter gespeichert ist.

2. Infrarot-Analysesystem nach Anspruch 1, bei dem die Behälter lokalisierende Vorrichtung (15) bewirkt, dass der Behälter (14) gedreht wird, während seine Position relativ zu der infraroten Lichtquelle (10) beibehalten wird.

3. Infrarot-Analysesystem nach Anspruch 1 oder 2, bei dem die Behälter lokalisierende Vorrichtung (15) ausgestaltet ist, um eine Mikroröhre (14) zu halten.

4. Infrarot-System nach Anspruch 1 oder 2, bei dem die Behälter lokalisierende Vorrichtung (15) ausgestaltet ist, um eine Kulturplatte (14) zu halten.

5. Infrarot-System nach einem der Ansprüche 1 bis 4, bei dem das Spektrometer (17) so angeordnet ist, um Licht aufzunehmen, welches durch den Behälter (14) hindurchgegangen ist.

6. Infrarot-System nach einem der Ansprüche 1 bis 4, bei dem das Spektrometer (17) so angeordnet ist, um Licht aufzunehmen, welches von dem Behälter (14) reflektiert ist.

**Revendications**

1. Système d'analyse infrarouge pour analyser des échantillons pour détecter une dégradation pendant le stockage, où les échantillons sont disposés dans des récipients transparents ou translucides, comprenant:

- une source lumineuse (10) infrarouge,
- un dispositif (15) pour localiser un récipient (14) dans une position connue par rapport à la source lumineuse (10) infrarouge,

- un spectromètre (17) disposé pour recevoir de la lumière infrarouge des récipients (14),

**caractérisé par**

- des moyens pour lire l'identité d'un récipient,
- des moyens disposés pour transmettre des spectres enregistrés par le spectromètre à une base de données,
- des moyens disposés pour enregistrer des spectres et l'identité des récipients dans la base de données dans un enregistrement,
- des moyens disposés pour comparer des spectres enregistrés par le spectromètre avec un spectre enregistré auparavant, qui est mémorisé dans la base de données pour le même récipient.

2. Système d'analyse infrarouge selon la revendication 1, où le dispositif (15) pour localiser un récipient fait tourner le récipient (14) lorsque sa position relative à la source lumineuse (10) infrarouge est maintenue.

3. Système d'analyse infrarouge selon la revendication 1 ou 2, où le dispositif (15) pour localiser un récipient est arrangé pour tenir un microtube (14).

4. Système infrarouge selon la revendication 1 ou 2, où le dispositif (15) pour localiser un récipient est arrangé pour tenir une plaque de culture (14).

5. Système infrarouge selon l'une des revendications 1 à 4, où le spectromètre (17) est disposé de telle façon pour recevoir de la lumière qui est transmise à travers le récipient (14).

6. Système infrarouge selon l'une des revendications 1 à 4, où le spectromètre (17) est disposé de telle façon pour recevoir de la lumière qui est reflétée par le récipient (14).

# Figure 1

EP 1 384 988 B1

**Figure 2**

EP 1 384 988 B1

**Figure 3**

Figure 4